Europäisches Patentamt

European Patent Office

Office européen des brevets

(11) Publication number: **0 246 679 B1**

# EUROPEAN PATENT SPECIFICATION

(45) Date of publication of patent specification: **25.03.92**   (51) Int. Cl.⁵: **B01J 4/00**, B01J 4/02

(21) Application number: **87200699.4**

(22) Date of filing: **14.04.87**

(54) **Apparatus for introducing solids into a vessel.**

(30) Priority: **23.04.86 GB 8609878**

(43) Date of publication of application:
**25.11.87 Bulletin  87/48**

(45) Publication of the grant of the patent:
**25.03.92 Bulletin  92/13**

(84) Designated Contracting States:
**BE DE FR GB IT NL**

(56) References cited:
**GB-A- 1 340 104**
**US-A- 2 789 889**
**US-A- 3 607 127**
**US-A- 3 957 443**

**Ullmann's Encyclopädie der technischen Chemie, Verlag Chemie, Weinheim, vol. 3, pages 447, 448 (1973)**

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **Woudstra, Jouke Jan**
**30, Carel van Bylandtlaan**
**NL-2596 HR The Hague(NL)**
Inventor: **Van Noppen, Jacob**
**30, Carel van Bylandtlaan**
**NL-2596 HR The Hague(NL)**

## Description

The present invention relates to an apparatus suitable for introducing solids into a vessel via a solids inlet opening and to an apparatus to be used in catalytic cracking of hydrocarbonaceous material.

A well-known apparatus for controlled introduction of solids into a vessel (e.g. comprising a fluidized bed of solids employed for catalytic cracking of heavy hydrocarbons) is a trickle valve which is generally located inside the vessel and connected to a dip leg of a solid-fluid separator (e.g. a cyclone). Such an apparatus can also be mounted in an opening in a (side) wall of the vessel.

However, in both cases particulate solids continuously come into contact with the valve means, interfere with its proper operation and may give serious erosion problems.

It would be highly desirable to have the disposal of an apparatus in which said problems do not occur and of which the internals can be easily replaced.

It has now been found that the afore-mentioned disadvantages can be overcome by an apparatus comprising tubular solids inlet means extending inside two coaxially arranged tubular elements which are positioned relative to each other in a particular manner.

The invention therefore relates to an apparatus suitable for introducing solids into a vessel via a solids inlet opening which comprises tubular solids inlet means, a shrouding tube, valve means arranged inside the shrouding tube to allow a controlled solids flow through the tubular solids inlet means, and sealing means arranged between the shrouding tube and the tubular solids inlet means to prevent leakage of gas and/or solids, wherein the tubular solids inlet means extends inside an open ended tubular housing of which the first end part can be secured to the solids inlet opening of the vessel, the shrouding tube is arranged substantially coaxially between the tubular housing and the tubular solids inlet means in such a manner that the downstream end part thereof extends outwardly from the first end part of the housing.

It should be noted that an apparatus for the dispersion of solids in a fluidized bed is known from Ullmanns Encyklopädie der technischen Chemie, Verlag Chemie, Weinheim, Volume 3, pages 447-448 (1973) which comprises a series of devices, one on top of the other, each consisting of a tubular solids inlet means around which substantially coaxially a shrouding tube is arranged and a conical valve means inside the shrouding tube.

The sealing means arranged between the tubular housing and the shrouding tube and between the shrouding tube and the tubular solids inlet means usually will also function as connection means between these components. Preferably a flange plate is used to connect and seal the second end of the open ended tubular housing and the shrouding tube. Preferably the connection and sealing between the shrouding tube and the tubular solids inlet means is also a flange plate.

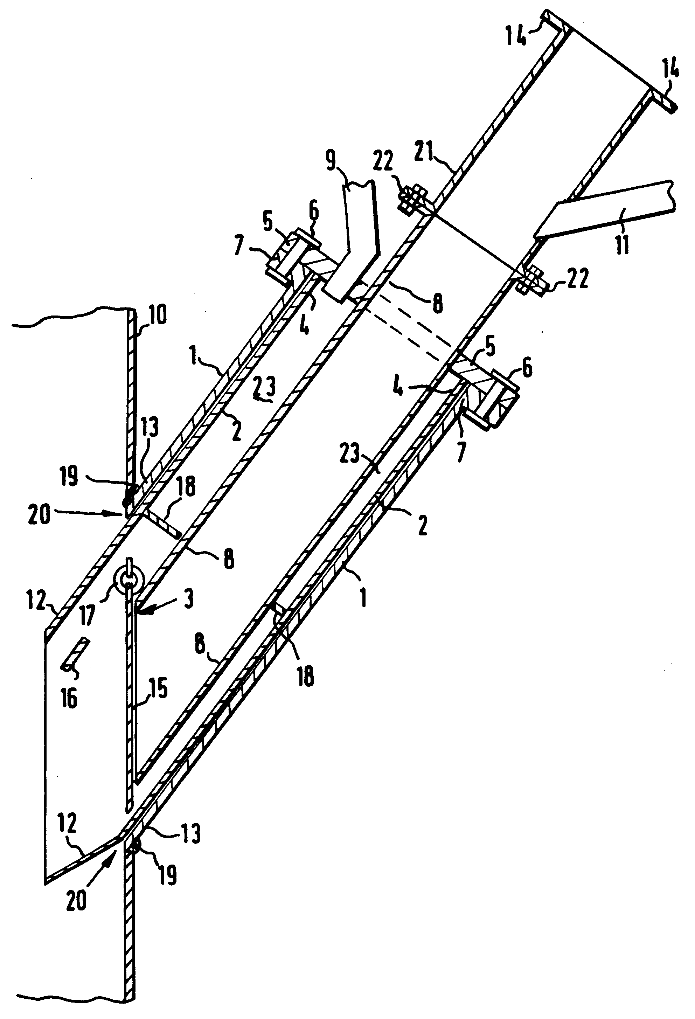

Preferred embodiments of the apparatus according to the invention are described hereinafter with reference to the Figure in which a longitudinal section of said apparatus is shown.

The apparatus depicted in the Figure comprises as essential elements an open ended tubular housing (1), a shrouding tube (2), valve means (3) and tubular solids inlet means (8).

Preferably, the upstream end part (4) of the shrouding tube (2) is provided with connecting means (5) (e.g. a flange plate), which are most preferably detachably secured (e.g. with bolts (6)) to the second end part (7) (e.g. a flange) of the tubular housing (1); said upstream end part (4) preferably has a larger diameter than the downstream end part (12) of the shrouding tube (2) in order to ensure that tube (2) is auto-detachable i.e. detaching connecting means (5) should be sufficient to remove tube (2) including all internals attached thereto, thus allowing easy inspection and eventual replacement of internals. In this preferred embodiment connecting means (5) also function as sealing means between the tubular housing, the shrouding tube and the solids inlet means. The connecting means (5) are preferably provided with fluid inlet (e.g. steam or fuel gas purge) means (9) (in order to avoid coke formation on the inner wall of tube (2)).

The upstream end part of the tubular solids inlet means (8) is preferably detachably secured (e.g. by means of a flange (22) connection) to a connecting tube (21) provided with connecting means (depicted as flange (14) in the Figure); tube (21) can be removed in case solids inlet means (8) has to be replaced. Said upstream end part and connecting tube (21) are preferably provided with an inner erosion protection lining, such as a refractory lining.

In some cases (e.g. when the solids flow resistance is high or when the pressure in the vessel (10) into which the solids are to be introduced is substantially higher than the pressure prevailing upstream of tubular solids inlet means (8)) it will be advantageous to introduce a fluid (e.g. a gas into the solids inlet means in the direction of the connecting means (5) in order to ensure proper solids flow conditions. Therefore, the solids inlet means (8) and/or the connecting tube (21) may be provided with one or more gas inlet means (11) which are preferably directed towards connecting means (5).

The downstream end part (12) of the shrouding tube (2) extends outwardly from the first end part (13) of the housing (1) (i.e. into vessel (10)). Preferably end part (12) thus extends beyond the valve means (3) in open- and in closed position in order to protect valve means (3) from a solids-containing gas stream which may flow along the wall of vessel (10) during operation (e.g. in a fluid catalytic cracking process); however, end part (12) is preferably provided with holes (not depicted in the Figure) in order to allow a gas flow along the inner wall of vessel (10).

Valve means (3) preferably comprise a non-return back pressure valve in order to prevent solids and fluid from flowing back via the downstream end part (12) of the shrouding tube (2) into tubular solids inlet means (8), because said back flow would seriously hamper the operation of any solids-fluid separation means (not shown in the Figure) which might be connected to solids inlet means (8) (e.g. via a dip leg (not shown) connected to flange (14) e.g. by means of a valve).

The valve means preferably comprise a valve plate (15) which is rotatable around a substantially horizontal axis which is preferably located at or near the upper end of valve plate (15) in closed (e.g. substantially vertical) position (as depicted in the Figure). Preferably, a stop plate (16) is arranged inside shrouding tube (2) downstream of valve rotation means (17) in such a manner that in open position valve plate (15) is arranged substantially parallel to the axis of tube (2).

Preferably, shrouding tube (2) comprises guiding means (18) (e.g. ring-shaped) arranged upstream adjacent to valve means (3) in order to guide and support tubular solids inlet means (8) and to restrict outflow of fluid supplied via inlet means (9) from annular space (23).

The length of the shrouding tube (2) (measured along its axis) is preferably such that an amount of solids can be retained therein which is large enough to avoid fluid back flow (e.g. from the dilute phase of a fluid catalyst bed in vessel (10) into tube (2).

The inner diameter of housing (1) is preferably only slightly greater than the outer diameter of shrouding tube (2) in order to avoid the presence of solid particles between housing (1) and tube (2) which would hinder the envisaged easy replacement of the shrouding tube (2) (together with valve means (3)). However, said diameters should differ sufficiently to allow for different expansion of shrouding tube (2) and housing (1) during operation at elevated temperatures e.g. from 100-700 ° C, in particular in case the inner wall of housing (1) is provided with an alloy steel cladding.

The ratio between the diameter of tube (2) and solids inlet tube (8) is preferably from 1-4, and most preferably from 1.5-3.

The first end part (13) of housing (1) can be secured to a (e.g. substantially vertical) wall of vessel (10) by any means known in the art, usually by means of a weld (19). Preferably, the apparatus according to the present invention is arranged in such a manner in a wall of a vessel (10) that the apparatus extends upwardly from opening (20) in said wall at an angle from 10-80 degrees, and most preferably from 20-60 degrees, measured between the axis of housing (1) and said wall of vessel (10).

## Claims

1. Apparatus suitable for introducing solids into a vessel via a solids inlet opening which comprises tubular solids inlet means (8), a shrouding tube (2), valve means (15) arranged inside the shrouding tube to allow a controlled solids flow through the tubular solids inlet means, and sealing means (5,6,7) arranged between the shrouding tube and the tubular solids inlet means to prevent leakage of gas and/or solids, characterized in that, the tubular solids inlet means (8) extends inside an open ended tubular housing (1) of which the first end part can be secured to the solids inlet opening of the vessel, the shrouding tube (2) is arranged substantially coaxially between the tubular housing (1) and the tubular solids inlet means (8) in such a manner that the downstream end part (12) thereof extends outwardly from the first end part (13) of the housing (1).

2. Apparatus according to claim 1 wherein the upstream end part (4) of the shrouding tube (2) is provided with connecting means (5) which are detachably secured to the second end part (7) of the tubular housing (1).

3. Apparatus according to claim 1 or 2 wherein the upstream end part of the tubular solids inlet means (8) is detachably secured to a connecting tube (21).

## Revendications

1. Appareil pour l'introduction de produits solides dans un récipient par l'intermédiaire d'une ouverture d'entrée de produits solides, appareil qui comporte des moyens tubulaires (8) d'entrée des produits solides, un tube enveloppe (2), des moyens d'ouverture-fermeture (15) disposés à l'intérieur du tube enveloppe pour permettre un flux commandé de produits solides à travers les moyens tubulaires d'entrée des produits solides, et des moyens d'étanchéité (5,6,7) disposés entre le tube enveloppe et les moyens tubulaires d'entrée des produits solides pour empêcher des fuites de gaz et/ou de produits solides, appareil caractérisé par le fait que les moyens tubulaires (8) d'entrée des produits solides s'étendent à l'intérieur d'un boîtier tubulaire (1) ouvert à l'extrémité, dont la première partie d'extrémité peut être fixée à l'ouverture d'entrée des produits solides du récipient, et par le fait que le tube enveloppe (2) est disposé substantiellement coaxialement entre le boîtier tubulaire (1) et les moyens tubulaires (8) d'entrée des produits solides de façon que sa partie d'extrémité aval (12) s'étende vers l'extérieur, depuis la première partie d'extrémité (13) du boîtier (1).

2. Appareil selon la revendication 1, dans lequel la partie d'extrémité amont (4) du tube enveloppe (2) comporte des moyens de connexion (5) qui sont fixés, de façon amovible, à la seconde partie d'extrémité (7) du boîtier tubulaire (1).

3. Appareil selon la revendication 1 ou 2, dans lequel la partie d'extrémité amont des moyens tubulaires (8) d'entrée des produits solides est fixée, de façon amovible, à un tube (21) qui y est connecté.

**Patentansprüche**

1. Apparat zur Einführung von Feststoffen in ein Gefäß über eine Feststoffeinlaßöffnung, umfassend eine rohrförmige Feststoffeinlaßeinrichtung (8), ein Abdeckrohr (2), eine Ventileinrichtung (15), die in dem Abdeckrohr angeordnet ist, um einen gesteuerten Feststofffluß durch die rohrförmige Feststoffeinlaßeinrichtung zu ermöglichen, und eine Dichtungseinrichtung (5,6,7), die zwischen dem Abdeckrohr und der rohrförmigen Feststoffeinlaßeinrichtung angeordnet ist, um ein Auslecken von Gas und/oder von Feststoffen zu verhindern, dadurch gekennzeichnet, daß die rohrförmige Feststoffeinlaßeinrichtung (8) sich in einem ein offenes Ende aufweisenden rohrförmigen Gehäuse (1) erstreckt, dessen erster Endteil an der Feststoffeinlaßöffnung des Gefäßes befestigt werden kann, und das Abdeckrohr (2) im wesentlichen gleichachsig zwischen dem rohrförmigen Gehäuse (1) und der rohrförmigen Feststoffeinlaßeinrichtung (8) derart angeordnet ist, daß sein stromabwärtiger Endteil (12) sich von dem ersten Endteil (13) des Gehäuses (12) auswärts erstreckt.

2. Apparat nach Anspruch 1, wobei der stromaufwärtige Endteil (4) des Abdeckrohres (2) mit Verbindungsmitteln (5) versehen ist, die an dem zweiten Endteil (7) des rohrförmigen Gehäuses (1) abnehmbar befestigt ist.

3. Apparat nach Anspruch 1 oder 2, wobei der stromaufwärtige Endteil der rohrförmigen Feststoffeinlaßeinrichtung (8) an einem Verbindungsrohr (21) abnehmbar befestigt ist.